Europäisches Patentamt

European Patent Office

Office européen des brevets

(19)

(11) Publication number: **0 134 322**
**B1**

# (12) EUROPEAN PATENT SPECIFICATION

(45) Date of publication of patent specification: **08.04.87**

(51) Int. Cl.⁴: **A 23 L 1/236**

(21) Application number: **83304673.3**

(22) Date of filing: **12.08.83**

(54) Process for incorporating aspartame into extruded products.

(43) Date of publication of application:
**20.03.85 Bulletin 85/12**

(45) Publication of the grant of the patent:
**08.04.87 Bulletin 87/15**

(84) Designated Contracting States:
**AT BE CH DE FR GB IT LI LU NL SE**

(56) References cited:
**US-A-3 799 918**
**US-A-3 962 468**
**US-A-4 004 039**

(73) Proprietor: **NABISCO BRANDS INC.**
**Nabisco Brands Plaza**
**Parsippany New Jersey 07054 (US)**

(72) Inventor: **Demaso, Patricia**
**796 East Ridgewood Ave.**
**Ridgewood New Jersey 07450 (US)**
Inventor: **Spotts, Jr., Clyde Emerson**
**39 Pershing Avenue**
**Ridgewood New Jersey 07450 (US)**
Inventor: **Ross, Robert Edgar**
**201 Farmingdale Road**
**Wayne New Jersey 07470 (US)**
Inventor: **Straka, Robert**
**2 Reynolds Road**
**Pequannock New Jersey 07440 (US)**

(74) Representative: **Thomas, Roger Tamlyn et al**
**D. Young & Co. 10 Staple Inn**
**London WC1V 7RD (GB)**

## Description

This invention relates to a process for incorporating an L-aspartic acid sweetening derivative into an extruded dry comestible. This invention also relates to extruded dry comestibles having an L-aspartic acid sweetening derivative which is distributed substantially uniformly throughout the extruded product.

L-aspartic acid sweetening derivatives, typical of which is the dipeptide N-L-aspartyl-L-phenylalanine methyl ester (aspartame) are potent sweetening agents which have been proposed for use as nutritive sweeteners for a wide range of foodstuffs. For example, in U.S. patent 3,799,918 alpha-aspartyl-alpha-alkyl aliphatic amino acid dipeptides are disclosed as sweetening agents for milk products, confections, bakery products, cereal, carbonated beverages, syrups, fruits, juices, and the like.

The sweetness of the L-aspartic acid derivatives has been estimated as about 100 to 200 times greater than the sweetness of sucrose on a weight-to-weight basis. However, many of the L-aspartic acid derivatives, such as aspartame, are prone to undergo a loss of sweetness in the presence of moisture, rendering them essentially non-functional in many food applications. Many processes to stabilize these L-aspartic acid derivatives in a form whereby they do not undergo degradation with accompanying loss of sweetness under storage conditions are known in the art. These processes typically involve encapsulating or coating particles of the L-aspartic acid derivative with various edible coating materials followed by drying and granulation.

For example, in U.S. patent 3,962,468, particles of L-aspartic acid derivatives are stabilized in a dry fixation by causing a slurry-forming level of undissolved hydrated particles of the sweetening compound to be dispersed in an aqueous dextrin solution as discretely distributed undissolved particles and drying the dispersion to encapsulate the particles of the L-aspartic acid derivative in the dextrin.

In U.S. patent 4,004,039, L-aspartyl-L-phenylalanine methyl ester crystals are stabilized into a particulate form so as to be free-flowing with other powderous materials. The stabilization process involves admixing the crystals with a matrix forming material such as dried coffee extract, whey, low dextrose equivalent starch polymers and protein extracts, heating the admixture to form a melt, in which the ester crystals are discretely distributed, calendering the melt between two rollers to submerge the crystals in the melt, cooling the melt, and then granulating the product to produce particles which encapsulate the crystals distributed therein. In lieu of the roll-fusing operation, other means, such as extrusion apparatus, capable of generating frictional heat to effect fusion through the work generated by the auger, can be used to effect fusion. Roller fusing is preferred because it is easier to control the moisture content of the mix.

In U.S. patent 3,934,048, dipeptide sweeteners such as L-aspartyl-L-phenylalanine methyl ester are imparted with a satisfactory rate of solubility and storage stability due to low hygroscopicity by co-drying a solution of the dipeptide and an edible, bland, low calorie polysaccharide.

The processes disclosed in U.S. patents 3,962,468, 4,004,039 and 3,934,048 each relates to the production of powdery or granular compositions. This type of composition is also disclosed in the above-mentioned U.S. patent 3,799,918. In the latter patent, a dry sweetening product is produced by combining a mixture of an alpha-aspartyl-alpha-alkyl aliphatic amino acid dipeptide and hydrolyzed cereal solids having a low dextrose equivalent with water and then spray drying.

Use of the L-aspartic acid derivatives directly or in a dry stabilized form as a replacement for sugar in foods has been hindered by a non-uniform sweetening response, such as hot spots, attributable to high concentrations of the sweetener at discrete locations on the foodstuff. The low solubility of the L-aspartic acid derivatives such as aspartame (1% in water at room temperature), has been indicated as a contributor to the non-uniformity of topical application of the derivatives on the surface of the foodstuff.

Another problem which has limited the use of L-aspartic acid derivatives as a substitute for sugar in certain foods is their thermal instability. For example, aspartame is a synthetic sweetener recently approved by the Food and Drug Administration. It does, however, have limited use due to its potential to decompose upon exposure to heat into diketopiperazine (DKP), for example, resulting in a reduction of sweetening power. Aspartame, as well as other heat sensitive L-aspartic acid derivative sweeteners, have therefore been considered unsuitable as a replacement for sugar in products that are neutral in reaction or which must be exposed to high temperatures during processing. Unfortunately, many of the foods that could benefit from a reduction in sucrose levels, such as baked goods or presweetened cereals fall onto these categories. To sweeten baked goods or ready-to-eat cereal products with aspartame, resort has been made to coating processes wherein the aspartame is not subjected to conventional baking temperatures and times.

In U.S. patent 3,955,000 cereal products, baked goods, such as pastry mixes, and confectionary foodstuffs intended to be sweetened with the sensation of sucrose are coated with an L-aspartic acid derivative, such as the methyl ester of L-aspartyl-L-phenylalanine. The derivatives are admixed in aqueous suspension with hydrolyzed amylaceous derivatives comprising predominantly oligosaccharides solids having a low dextrose equivalency, of about less than 30, and applied as a coating solution to the comestible. A coating of the dried solution, it is disclosed, smoothes out the taste impact generated by any sweetening imbalance attributable to the incomplete solution of the L-aspartic acid derivative or non-uniformity of its dispersion. The uniform distribution of sweetness, such that when the foodstuff is eaten "hot spots" are minimized, is attributed principally to the starch hydrolyzate.

In the process of U.S. patent 3,955,000, the coating solution is maintained at a temperature below 200°F so as to have the sweetening derivative dispersed therein as undissolved hydrated particles. The solution is applied to the foodstuff by atomization or other spray techniques. The coated comestible, it is disclosed is dried at product temperatures which do not exceed 200°F in order to assure that the sweetening compound is not degraded while the coated comestible is dried to a stable moisture content of below about 8%.

The coating process of U.S. patent 3,955,000 results in products which have a frosted or glazed appearance to make the product look sugar coated. Other substances, such as fats and starches, it is disclosed, can be incorporated in the coating to create a dull or crystalline appearance suggestive of other sweetened cereal applications. However, the appearance of a sugar coating, whether glazed or dull is associated with an undesirable amount of sugar by many consumers. Further, the dextrins and other additives in the coating increase the calorific value of the foodstuff. The coating, when applied to a cereal product, such as corn flakes, dissolves in milk which reduces the sweetness of the product often to an undesirable extent. The coating process does not permit combining of all the ingredients in one operation because the coating components must be applied to the formed product. Additionally, the coating process of U.S. patent 3,955,000 does not result in a final product having the sweetener distributed substantially throughout the product.

Unexpectedly, with the extrusion process of the present invention, the L-aspartic acid sweetening derivative can be exposed to typical baking temperatures and times without substantial decomposition. It is not known why high temperatures can be used in an extruder. It is believed to be a combination of the time, temperature, and pressure profiles of the extrusion process, for a given method of combining the sweetener with the other ingredients. The stability of aspartame in solution is a function of pH, time of exposure to high temperatures, and temperature. By controlling the detrimental effects of pH and exposure time, the adverse effects of higher temperatures during processing of a variety of baked-type goods and cereal products is minimized by the extrusion process of the present invention.

The process for making the extruded dry comestibles is economical, does not involve a separate coating step for incorporating the L-aspartic acid sweetening derivative into the product, achieves substantially uniform distribution of the sweetener throughout the dry comestible, and minimizes the decomposition or carmelization of the sweetener during production of the dry comestible. The process of the present invention permits the use of aspartame as a replacement for sugar in foods that are neutral in reaction or which must be exposed to high temperatures during processing. The use of dextrins, which increase the calorific value of the comestible, to obtain uniform distribution of the aspartame as in U.S. patent 3,955,000, is not needed in the process of the present invention.

The invention provides inter alia an extruded baked dry comestible, such as a ready-to-eat cereal or a baked-type good having an L-aspartic acid sweetening derivative, such as N-L-aspartyl-L-phenylalanine methyl ester (aspartame) distributed substantially uniformly throughout the dry comestible. The extruded baked products of the present invention do not look sugar coated, have a pleasing texture, and do not contain "hot spots" due to high concentrations of the sweetener at discrete locations in the comestible. A uniform sweetening response is exhibited throughout the products and they are shelf-stable.

Summary of the invention

According to one aspect thereof the invention provides a process for making dry baked comestibles, such as cereal products and baked-type goods, which is sweetened with an L-aspartic acid sweetening derivative, such as L-aspartyl-L-phenylalanine methyl ester (aspartame). The process comprises admixing an aqueous solution of the L-aspartic acid sweetening derivative having a pH of from 1 to 7 with a pre-blend of the dry ingredients of the comestible to form a dough, extruding the dough at a temperature sufficient to bake and expand it without substantial decomposition of said sweetening derivate, and cutting the extruded product into pieces. Decomposition or carmelization of the L-aspartic acid sweetening derivative during processing is minimized by controlling the pH of the sweetener solution used in the extrusion, and the exposure time of the sweetener to high temperatures during production of the dry comestible.

Substantially uniform distribution of the sweetening derivative throughout the dry comestible is best achieved by preblending all flours, salts, emulsifiers and other dry ingredients of the comestible and then coextruding the preblended mixture with an aqueous solution of the L-aspartic acid sweetening derivative.

Due to the use of small quantities of the potent L-aspartic acid sweetening derivatives, the sweetener is fed to the extruder as an aqueous solution to reduce physical losses of the sweetener and to reduce the time needed to achieve substantially uniform distribution of the sweetener through the comestible. An acidic solution of the L-aspartic acid sweetening derivative is used to obtain maximum solubility with minimal decomposition. Pharmaceutically acceptable pH-adjusters are preferably used to obtain a sweetener solution having a pH of 1. For aspartame, a pH of 2—3 is optimal.

· The use of an extruder permits rapid, homogeneous mixing of all ingredients thereby reducing the exposure time of the L-aspartic acid derivatives to high processing temperatures. Additionally, upon the exiting from the extruder, the extruded product expands thereby reducing or eliminating the amount of subsequent drying needed to achieve a desired moisture level in the dry comestible. The resulting extruded dry comestibles are highly palatable, shelf-stable, do not look sugar coated, and do not contain localized concentrations or "hot spots" of the L-aspartic acid sweetening derivative.

Detailed description of the preferred embodiments

The L-aspartic acid sweetening derivative used in the present invention is preferably L-aspartyl-L-phenylalanine methyl ester (aspartame) because of its recent approval for use in foods by the Food & Drug Administration. However, other L-aspartic acid sweetening derivatives, such as those disclosed in U.S. patent 3,955,000 at column 3 line 63 to column 4 line 35, can also be used in producing dry extruded comestibles in accordance with the present invention.

The aqueous solution of the L-aspartic acid sweetener derivative is preferably prepared by first dry blending the sweetener with a pH-adjuster. The dry blend is then added to water to form the solution. The water may be preheated to increase the solubility of the sweetener. Dry blending assures that the dry sweetener is added in an amount such that it is dissolved in the pH adjusted aqueous solution. The concentration of the sweetener in the pH adjusted solution is typically 0.1% to 10% by weight of the final solution, depending upon solubility of the sweetener in water. In the case of aspartame, the concentration is 0.1% to 10%, preferably about 2% by weight aspartame based upon the weight of the final solution. The pH adjuster is added in an amount which results in an acidic pH which increases the solubility and stability of the sweetener in the aqueous solution. The pH used will depend upon the specific L-aspartic acid sweetener but it is generally in the range of 1 to 7. It has been found that at a pH of 2 to 3, aspartame exhibits optimal stability and solubility in the aqueous solution. At lower pHs, particularly less than 2, the stability of aspartame decreases. At a pH above 7 the solubility of the aspartame decreases to an unsuitable level.

The temperature of the water to which the dry blend of sweetener and pH adjuster is added should be sufficiently high so that the preblend completely or substantially completely dissolves in water. However, it should be low enough so as not to adversely affect the stability of the sweetener. Typically, the water temperature should be in the range of from 40°F (4.5°C) to 210°F (99°C). For aspartame, water temperatures of from 40° (4.5°C) to 210°F (99°C), preferably 70°F (21°C) to 160°F (71°C), most preferably 85°F (29°C) to 100°F (38°C) are used to dissolve the aspartame without substantial decomposition. By maintaining the aqueous solution of the sweetener at a temperature within the above ranges, crystallization of the sweetener from the solution prior to and/or during feeding of the solution to the extruder can be avoided.

Use of a solution as opposed to an aqueous slurry or dispersion of the sweetener, facilitates handling by reducing equipment clogging and reduces the need for special equipment for handling slurries. Additionally, the lower viscosity of the solution and the larger quantity of solution (for a given amount of sweetener) results in the attainment of a substantially uniform distribution of the sweetener faster than could be obtained if a slurry were used.

The L-aspartic acid sweetening derivative used to produce the aqueous solution used in the present invention is preferably in pure form. While L-aspartic acid sweetening derivatives, which have been coated or encapsulated with edible materials to improve their flow characteristics and/or stability can be used, they are not preferred because of increased cost. Additionally, the coatings often lower the dissolution rate and increase the calorific value of the foodstuff unnecessarily.

The preferred pH adjusters for use in the present invention are a citric acid and sodium citrate buffer system and malic acid. However, other known pharmaceutically acceptable inorganic or organic acids or buffering systems which do not adversely affect the taste of the dry comestible can also be used. The organic acids are preferred organoleptically over the inorganic acids. Exemplary of other suitable organic acids are fumaric acid, adipic acid, tartaric acid, and mixtures thereof. Malic acid is the preferred organic acid because it imparts a pleasant taste to the dry comestible. Exemplary of other suitable buffering systems are any of the above organic acids in combination with an alkali metal salt thereof.

The aqueous solution of the sweetening derivative is fed to the extruder at a rate which provides a level of acceptable sweetness, as determined by a professional taste panel, in the finished dry comestible. For aspartame, a solution feed rate which would provide an aspartame level of 0.001% to 1%, preferably 0.10% to 1% by weight of the finished extruded product, provides an acceptable sweetness level. While some of the aspartame may decompose during processing, depending on extruder conditions, the remaining amount should provide an acceptable level of sweetness. It has been found that under the same processing conditions, higher levels of sweetness can be obtained with the aspartame than with sugar without undesirable browning, and without an undesirable increase in hardness or decrease in size of the finished product which are caused by carmelization of the sugar.

A typical formulation for the dry comestible contains 65% to 90% by weight flour, 5% to 30% by weight water, 1% to 3% by weight emulsifiers, and 1% to 3% by weight salts. Other ingredients known in the cereal and bakery art, for providing suitable texture, flavor, preservation, color and the like of the finished dry comestible, can also be included in amounts conventionally used in the art.

Any known formulations for the production of dry comestibles can be used in the extrusion process of the present invention provided that the dough which is formed by admixing the dry and wet ingredients with the sweetener of the present invention is soft enough to be extruded. The moisture content of the mixed dough should be high enough to assure dough softness and to assist in the expansion or puffing of the dough as the dough exits from the extruder. If the moisture content of the dough is too high, higher temperatures and longer times would be needed to obtain a final product having an acceptable level of moisture. Unnecessary decomposition of the sweetener could occur as a result of the longer exposure to higher processing temperatures. Suitable moisture contents of the mixed dough are in the range of 5% to 30%, preferably 10% to 20% by weight of the mixed dough.

When known formulations which contain a sweetener component are used, the sweetener component is replaced in whole or in part by the L-aspartic acid sweetening derivative. Complete replacement is preferred so as to reduce the cariogenicity of the finished product to the maximum extent possible. The L-aspartic acid sweetening derivatives can be used in combination with other sweeteners, natural or artificial, to provide a level of acceptable sweetness. Exemplary of the sweeteners are saccharin, cyclamates, stevioside, fructose, sorbitol, sucrose, glucose, and the like.

Exemplary of the dry comestibles which can be produced in accordance with the present invention are cereal products such as pre-sweetened ready-to-eat expanded cereals, flaked cereals (formed from pellets), instant hot cereals, and bakery-type products such as sweet snacks, expanded cookie-like products, sweetened crispbreads, wafer cookies, ice cream cone or sandwich components and confectionary components.

The dry ingredients are preferably preblended in a blender such as a ribbon blender, a v-blender, a zig-zag blender, or a Hobart blender, and then fed to the extruder via a hopper. The aqueous sweetening solution is separately fed to the extruder, preferably by means of a positive displacement pump. The aqueous solution of the sweetener is admixed with the dry ingredients of the formulation by means of a screw conveyer of the extruder. The screw forces the dough through a die to form the desired shape. The extruded material is then cut into pieces.

In the extruder the temperature during mixing of the aqueous solution and the preblended dry ingredients should be 40°F (4.5°C) to 210°F (99°C) for residence times of 2 minutes to 0.2 minutes. The temperature at the exit of the extruder is maintained sufficiently high so as to enable moisture reduction, baking and expansion of the mixed dough as it exits the extruder. Generally, the temperature at the exit end of the extruder should be 210°F (99°C) to 400°F (204°C). The residence time should be long enough to allow baking of the dough. However, the residence time should be sufficiently short so as to avoid decomposition of the sweetener. The residence time should generally be less than or equal to 4 minutes, preferably less than 2 minutes, more preferably less than 1 minutes, most preferably less than 0.8 minutes. Typical residence times range from 4 minutes down to 0.2 minutes, praferably from 2 minutes down to 0.3 minutes, more preferably from 1 minutes down to 0.35 minutes, most preferably from 0.8 minutes down to 0.4 minutes.

The pressures used in the extruder are those conventionally used in the production of expanded or puffed extruded dry comestibles and range generally from 400 p.s.i.g. (2760 kPa) to 4000 p.s.i.g. (27,600 kPa). The mixed dough is, accordingly, typically subjected to a pressure drop of 400 to 4000 p.s.i. (2760—27,600 kPa) as it exits from the extruder.

Substantially all of the aspartame contained in the dough prior to baking is retained in the extrusion process of the present invention. Depending upon extruder processing conditions, retention levels of at least 90% by weight and of at least 95% by weight, based upon the amount of aspartame prior to baking can be achieved. It is believed, however, that flavorings, such as honey, cinnamon, and chocolate, have a tendency to degrade aspartame. If a flavoring causes decomposition to occur so as to result in an unacceptable sweetness level, higher initial aspartame levels could be used.

Feeding the L-aspartic acid sweetening derivative as an acidic aqueous solution to the extruder and combining the sweetener solution with the other ingredients of the dry comestible in the extruder, has been found to be the most feasible method of combining the ingredients. However, other methods of combining the ingredients can be used to achieve a level of acceptable sweetness in the finished dry comestible.

For example, the aqueous sweetener solution, containing the pH adjuster, can be premixed with some or all of the dry ingredients before feeding to the extruder. Blenders conventionally used in the food industry, such as a Hobart blender, can be used to form the premix. The mixing should be carried out long enough to obtain substantial homogeneity and at a temperature which minimizes decomposition of the sweetener.

The temperatures, residence times, and pressures used in the extruder, when combining the ingredients by these methods, should generally be within the above ranges. Depending upon the temperature and the degree of mixing achieved outside of the extruder, other temperatures and residence times may be needed to achieve minimal sweetener decomosition and/or satisfactory moisture levels in the extruded product.

Extruders known in the baking art for the production of expanded or puffed dry cereals can be used in the present invention. However, a twin screw extruder, such as that manufactured by Creusot-Loire is preferable for easier control of mixing of the dough and moisture contents of the extruded product. Shorter residence times of portions of the dough mass are needed with the twin screw extruder than with a single screw extruder to obtain substantial homogeneity of the dough and substantially uniform distribution of the sweetening derivative throughout the dough and extruded product.

Moisture levels can be adjusted to any level with either the twin or single screw extruder by controlling the residence time, the temperatures, and the pressure in the extruder. It is preferable to reduce the moisture level to 0.5—15%, more preferably to 4—12% by weight water, based upon the weight of the extruded dry product, so as to improve the flavor of the final product. Subsequent drying of the extruded product, in a tunnel dryer or other bakery-type dryer, can be used to achieve a moisture content within the above ranges.

By using different extruder die plates and settings, a variety of shapes for the finished product can be obtained. Suitable shapes are cylindrical, O-shaped, rectangular, numerically shaped, letter-shaped, and the like. The extruded product can be cut by methods known in the art to obtain flakes, buds, and other bite-size configurations known in the cereal art or to obtain wafers, cookie-like shapes and snack food-like shapes, for example. Suitable cutters are rotary and reciprocating cutters.

The present invention is further illustrated in the following examples. All percentages, parts and proportions are by weight unless otherwise indicated:

Example 1

In this example, the dry ingredients for a cereal product, except for the sugar, are used. The dry ingredients and their relative amounts are:

| Ingredient | Pounds | (Kg) |
|---|---|---|
| Wheat Flour | 130 | (59) |
| Oat Flour | 35 | (16) |
| Corn Flour | 25 | (11) |
| Brown Rice Flour | 5 | (2.3) |
| Malt Flour | 5 | (2.3) |
| Salt | 5 | (2.3) |
| Emulsifiers | 1 | (0.5) |
| Total | 206 | (93.4) |

An aqueous L-aspartic acid sweetener solution is then prepared by dry blending citric acid, sodium citrate and aspartame and adding the preblended mixture to 90°F (32°C) water to form a solution. The citric acid and the sodium citrate are used in amounts necessary to obtain a 0.1 M citric acid concentration and a 0.1 M sodium citrate concentration. The amount of aspartame used was sufficient to obtain a solution containing 2% aspartame by weight, based upon the weight of the solution. The pH of the solution was 2.7.

The remaining dry ingredients were dryblended in a ribbon blender for 20 minutes at a speed of 30 r.p.m.

The preblended mixture of the dry ingredients were fed into a twin screw C-L extruder at a rate of 5 pounds (2.3 Kg) per minute. The sweetener solution was then separately fed to the extruder at a rate of 175 grams/minute. The sweetener solution and the dry blended ingredients were admixed in the extruder at a temperature of about 140°F (60°C) for a residence time of 0.5 minutes to form a dough. The dough was extruded at a temperature of about 350°F (177°C) for a residence time of 0.5 minutes and a pressure of 2200 p.s.i.g. (15,200 kPa) through a figure "8" shaped extruder die plate down to atmospheric pressure, and then cut into bite-size pieces on a rotary cutter.

The finished product was found to have a pleasant taste. The product was analyzed by high performance liquid chromatography. The aspartame was found to be present in the finished product at a level of about 95% by weight of the originally added aspartame.

Example 2

Example 1 is repeated except that malic acid is substituted for the citric acid and the sodium citrate. The malic acid is used in an amount which is necessary to obtain a 0.18 M malic acid concentration. The pH of the solution was 2.4.

The finished product was found to have a pleasing taste. The product was analyzed by high performance liquid chromatography. The aspartame was found to be present in the finished product at a level of about 95% by weight of the originally added aspartame.

**Claims**

1. A process for producing a dry comestible which is sweetened with an L-aspartic acid sweetening derivative comprising admixing an aqueous solution of the L-aspartic acid sweetening derivative having a pH of from 1 to 7 with a pre-blend of the dry ingredients of the comestible to form a dough, extruding the dough at a temperature sufficient to bake and expand it without substantial decomposition of said sweetening derivative, and cutting the extruded product into pieces.

2. A process as claimed in claim 1 wherein said aqueous sweetening solution and said preblend are admixed in the extruder.

3. A process as claimed in claim 2 wherein the L-aspartic acid sweetening derivative is L-aspartyl-L-phenylalanine methyl ester.

4. A process as claimed in claim 2 or 3 wherein the concentration of said sweetening derivative in said solution is from 0.1% to 10% by weight of the solution.

5. A process as claimed in claim 4 wherein the temperature of said aqueous sweetening solution is from 40°F (4.5°C) to 210°F (99°C).

6. A process as claimed in claim 1 wherein the concentration of said sweetening derivative and the temperature of said sweetening solution are insufficient for crystallization of the sweetening derivative.

7. A process as claimed in claim 1 wherein said sweetening solution contains a pharmaceutically acceptable pH adjuster to maintain the pH in the range of 1 to 7.

8. A process as claimed in claim 7 wherein said pH adjuster is an organic acid or an organic acid and an alkali metal salt thereof.

9. A process as claimed in claim 8 wherein said pH adjuster is a citric acid/sodium citrate buffer system or malic acid.

10. A process as claimed in claim 3 wherein said admixing to form said dough is at a temperature in the range of about 40°F to about 210°F.

11. A process as claimed in claim 10 wherein said dough is extruded at a temperature of 210°F (99°C) to 400°F (204°C).

12. A process as claimed in claim 2 wherein said extruder is a twin screw extruder.

13. A process as claimed in claim 3 wherein the extruded product is cut into pieces and then the moisture content is reduced to from 0.5% to 15% by weight of the finished product.

14. A process as claimed in claim 12 wherein the moisture content of the extruded product is less than 15% by weight of the extruded product.

15. A process as claimed in claim 3 wherein said dough is extruded at a temperature which is sufficient to dry said dough to a moisture content of less than 15% by weight of the extruded product.

16. A process as claimed in claim 1, 3, 13 or 14 wherein the amount of said sweetening derivative in the dry comestible is from 0.001% to 1.0% by weight based upon the weight of the finished product.

17. A process as claimed in claim 16 in which the dry comestible is a cereal product.

18. A process as claimed in claim 17 in which the dry comestible is in the shape of a figure eight.

19. A process as claimed in claim 7 wherein the aqueous sweetener solution and the dry ingredients are admixed prior to being fed to the extruder.

20. A process as claimed in claim 7 wherein said sweetening derivative is N-L-aspartyl-L-phenylalanine methyl ester and said pH is in the range 2.0—3.0.

21. A process as claimed in claim 19 wherein said dough is formed in the extruder.

22. A process as claimed in claim 1, 3, 11, 19 or 21 wherein the dough is baked at the exit end of the extruder and upon exiting from the extruder the baked dough is subjected to a pressure drop of 400 p.s.i. (2760 kPa) to 4,000 p.s.i. (27,600 kPa) to expand the baked dough.

23. A process as claimed in claim 22 wherein the amount of the sweetening derivative in the baked dry comestible is at least 95% by weight of the amount of the sweetening derivative present in the dough prior to baking.

24. A process as claimed in claim 7 wherein substantially all of the sweetening derivative present in the dough prior to baking is present in the baked dry extruded comestible.

25. A process as claimed in claim 22 wherein said baking of the dough at the exit end of the extruder is at a temperature of from 210°F (99°C) to 400°F (204°C) for a residence time of less than or equal to 4 minutes.

26. A process as claimed in claim 7 wherein the dough is baked in the extruder at the exit end of the extruder and the residence time for baking of the dough at the exit end of the extruder is from 0.2 minutes to 4 minutes.

**Patentansprüche**

1. Verfahren zur Herstellung eines trockenen Nahrungsmittels, das mit einem L-Asparaginsäure-Süßungsderivat gesüßt ist, umfassend: Zumischen einer wässrigen Lösung des L-Asparaginsäure-Süßungsderivats mit einem pH-Wert von 1 bis 7 zu einer Vormischung der Trockenbestandteile des Nahrungsmittels zur Herstellung eines Teiges, Extrudieren des Teiges bei einer Temperatur, die zum Backen und Dehnen des Teiges ohne wesentliche Zersetzung des genannten Süßungsderivats ausreicht, und Schneiden des extrudierten Produktes in Stücke.

2. Verfahren nach Anspruch 1, dadurch gekennzeichnet, daß die genannte wässrige Süßungslösung und die genannte Vormischung im Extruder gemischt werden.

3. Verfahren nach Anspruch 2, dadurch gekennzeichnet, daß das genannte L-Asparaginsäure-Süßungsderivat L-Asparatyl-L-phenylalaninmethylester ist.

4. Verfahren nach Anspruch 2 oder 3, dadurch gekennzeichnet, daß die Konzentration des genannten Süßungsderivats in der genannten Lösung 0,1 bis 10 Gew.% der Lösung beträgt.

5. Verfahren nach Anspruch 4, dadurch gekennzeichnet, daß die Temperatur der genannten wässrigen Süßungslösung 40°F (4,5°C) bis 210°F (99°C) beträgt.

6. Verfahren nach Anspruch 1, dadurch gekennzeichnet, daß die Konzentration des genannten Süßungsderivats und die Temperatur der genannten Süßungslösung für die Kristallisation des Süßungsderivats nicht ausreichen.

7. Verfahren nach Anspruch 1, dadurch gekennzeichnet, daß die genannte Süßungslösung ein pharmazeutisch akzeptables Mittel zur Einstellung des pH-Wertes enthält, sodaß der pH-Wert im Bereich von 1 bis 7 gehalten wird.

8. Verfahren nach Anspruch 7, dadurch gekennzeichnet, daß das genannte Mittel zur Einstellung des pH-Wertes eine organische Säure oder eine organische Säure und ein Alkalisalz derselben ist.

9. Verfahren nach Anspruch 8, dadurch gekennzeichnet, daß das genannte Mittel zur Einstellung des pH-Wertes ein Citronensäure/Natriumcitrat-Puffersystem oder Apfelsäure ist.

10. Verfahren nach Anspruch 3, dadurch gekennzeichnet, daß das genannte Mischen zur Herstellung des Teiges bei einer Temperatur im Bereich von ungefähr 40°F bis 210°F erfolgt.

11. Verfahren nach Anspruch 10, dadurch gekennzeichnet, daß der genannte Teig bei einer Temperatur von 210°F (99°C) bis 400°F (204°C) extrudiert wird.

12. Verfahren nach Anspruch 2, dadurch gekennzeichnet, daß der genannte Extruder ein Doppelschneckenextruder ist.

13. Verfahren nach Anspruch 3, dadurch gekennzeichnet, daß das extrudierte Produkt in Stücke geschnitten wird und der Feuchtigkeitsgehalt dann auf 0,5 bis 15 Gew.% des fertigen Produktes reduziert wird.

14. Verfahren nach Anspruch 12, dadurch gekennzeichnet, daß der Feuchtigkeitsgehalt des extrudierten Produktes weniger als 15 Gew.% des extrudierten Produktes beträgt.

15. Verfahren nach Anspruch 3, dadurch gekennzeichnet, daß der genannte Teig bei einer Temperatur extrudiert wird, die ausreicht, den genannten Teig auf einen Feuchtigkeitsgehalt von weniger als 15 Gew.% des extrudierten Produktes zu trocknen.

16. Verfahren nach Anspruch 1, 3, 13 oder 14, dadurch gekennzeichnet, daß die Menge des genannten Süßungsderivats im trockenen Nahrungsmittel 0,001 bis 1,0 Gew.% berechnet vom Gewicht des fertigen Produktes beträgt.

17. Verfahren nach Anspruch 16, bei dem das trockene Nahrungsmittel ein Getriedeprodukt ist.

18. Verfahren nach Anspruch 17, bei dem das trockene Nahrungsmittel die Form der Zahl acht hat.

19. Verfahren nach Anspruch 7, dadurch gekennzeichnet, daß die wässrige Süßungslösung und die trockenen Bestandteile vor dem Einführen in den Extruder gemischt werden.

20. Verfahren nach Anspruch 7, dadurch gekennzeichnet, daß das genannte Süßungsderivat N-L-Aspartyl-L-phenylalaninmethylester ist und der genannte pH-Wert im Bereich von 2,0 bis 3,0 liegt.

21. Verfahren nach Anspruch 19, dadurch gekennzeichnet, daß der genannte Teig im Extruder geformt wird.

22. Verfahren nach Anspruch 1, 3, 11, 19 oder 21, dadurch gekennzeichnet, daß der Teig am Ausgangsende des Extruders gebacken wird und beim Austritt aus dem Extruder der gebackene Teig einem Druckabfall von 400 p.s.i. (2760 kPa) bis 4 000 p.s.i. (27 600 kPa) zu dessen Dehnung unterworfen wird.

23. Verfahren nach Anspruch 22, dadurch gekennzeichnet, daß die Menge des Süßungsdervats im gebackenen trockenen Nahrungsmittel mindestens 95 Gew.% der Menge des vor dem Backen im Teig enthaltenen Süßungsderivats beträgt.

24. Verfahren nach Anspruch 7, dadurch gekennzeichnet, daß im wesentlichen des gesamte vor dem Backen im Teig enthaltene Süßungsderivat im gebackenen trockenen extrudierten Nahrungsmittel enthalten ist.

25. Verfahren nach Anspruch 22, dadurch gekennzeichnet, daß das genannte Backen des Teiges am Ausgangsende des Extruders bei einer Temperatur von 210°F (99°C) bis 400°F (204°C) über eine Verweilzeit von 4 Minuten oder weniger erfolgt.

26. Verfahren nach Anspruch 7, dadurch gekennzeichnet, daß der Teig im Extruder an dessen Ausgangsende gebacken wird und die Verweilzeit für das Backen des Teiges am Ausgangsende des Extruders 0,2 bis 4 Minuten beträgt.

**Revendications**

1. Un procédé pour la production d'un produit comestible sec, qui est édulcoré avec un dérivé édulcorant de l'acide L-aspartique, comprenant le mélange d'une solution aqueuse du dérivé édulcorant de l'acide L-aspartique ayant un pH de 1 à 7 avec un prémélange des ingrédients secs du produit comestible pour former une pâte, extrusion de la pâte à une température suffisante pour la cuire et l'expanser sans décomposition notable dudit dérivé édulcorant et découpage du produit extrudé en morceaux.

2. Un procédé comme revendiqué dans la revendication 1 dans lequel ladite solution édulcorante aqueuse et ledit prémélange sont mélangés dans l'extrudeuse.

3. Un procédé comme revendiqué dans la revendication 2 dans lequel le dérivé édulcorant de l'acide L-aspartique est l'ester méthylique de la L-aspartyl-L-phénylalanine.

4. Un procédé comme revendiqué dans la revendication 2 ou 3 dans lequel la concentration dudit dérivé édulcorant dans ladite solution est de 0,1% à 10% du poids de la solution.

5. Un procédé comme revendique dans la revendication 4 dans lequel la température de ladite solution édulcorante aqueuse est de 40°F (4,5°C) à 210°F (99°C).

6. Un procédé comme revendiqué dans la revendication 1 dans lequel la concentration dudit dérivé édulcorant et la température de ladite solution édulcorante sont insuffisantes pour la cristallisation du dérivé édulcorant.

7. Un procédé comme revendiqué dans la revendication 1 dans lequel ladite solution édulcorante contient un agent d'ajustement du pH pharmaceutiquement acceptable pour maintenir le pH dans la gamme de 1 à 7.

8. Un procédé comme revendiqué dans la revendication 7 dans lequel ledit agent d'adjustement du pH est un acide organique ou un acide organique et un sel de métal alcalin de celui-ci.

9. Un procédé comme revendiqué dans la revendication 8 dans lequel ledit agent d'adjustement du pH est un système tampon acide citrique/citrate de sodium ou l'acide malique.

10. Un procédé comme revendiqué dans la revendication 3 dans lequel ledit mélange pour former ladite pâte est effectué à une température dans la gamme d'environ 40°F (4,5°C) à environ 210°F (99°C).

11. Un procédé comme revendiqué dans la revendication 10 dans lequel ladite pâte est extrudée à une température de 210°F (99°C) à 400°F (204°C).

12. Un procédé comme revendiqué dans la revendication 2 dans lequel ladite extrudeuse est une extrudeuse à vis jumelées.

13. Un procédé comme revendiqué dans la revendication 3 dans lequel le produit extrudé est découpé en morceaux puis la teneur en humidité est réduite de 0,5% à 15% du poids du produit final.

14. Un procédé comme revendiqué dans la revendication 12 dans lequel le taux d'humidité du produit extrudé est inférieur à 15% du poids du produit extrudé.

15. Un procédé comme revendiqué dans la revendication 3 dans lequel ladite pâte est extrudée à une température qui est suffisante pour sécher ladite pâte à un taux d'humidité inférieur à 15% du poids du produit extrudé.

16. Un procédé comme revendiqué dans la revendication 1, 3, 13 ou 14 dans lequel la quantité dudit dérivé édulcorant dans le produit comestible sec est de 0,001% à 1,0% en poids par rapport au poids du produit final.

17. Un procédé comme revendiqué dans la revendication 16 dans lequel le produit comestible sec est un produit du type céréales.

18. Un procédé comme revendiqué dans la revendication 17 dans lequel le produit comestible sec est sous forme d'un chiffre huit.

19. Un procédé comme revendiqué dans la revendication 7 dans lequel la solution aqueuse d'édulcorant et les ingrédients secs sont mélangés avant d'être introduits dans l'extrudeuse.

20. Un procédé comme revendiqué dans la revendication 7 dans lequel ledit dérivé édulcorant est l'ester méthylique de la N-L-aspartyl-L-phénylalanine et ledit pH est dans la gamme de 2,0—3.0.

21. Un procédé comme revendiqué dans la revendication 19 dans lequel ladite pâte est formée dans l'extrudeuse.

22. Un procédé comme revendiqué dans la revendication 1, 3, 11, 19 ou 21 dans lequel la pâte est cuite à l'extrémité de sortie de l'extrudeuse et, en sortant de l'extrudeuse, la pâte cuite est soumise à une chute de pression de 400 psi (2 760 kPa) pour expanser la pâte cuite.

23. Un procédé comme revendiqué dans la revendication 22 dans lequel la quantité du dérivé édulcorant dans le produit comestible sec cuit est d'au moins 95% du poids de la quantité du dérivé édulcorant présente dans la pâte avant la cuisson.

24. Un procédé comme revendiqué dans la revendication 7 dans lequel la quasi-totalité du dérivé édulcorant présente dans la pâte avant la cuisson est présente dans le produit comestible extrudé sec cuit.

25. Un procédé comme revendiqué dans la revendication 22 dans lequel ladite cuisson de la pâte à l'extrémité de sortie de l'extrudeuse est effectuée à une température de 210°F (99°C) à 400°F (204°C) pour un temps de séjour inférieur ou égal à 4 minutes.

26. Un procédé comme revendiqué dans la revendication 7 dans lequel la pâte est cuite dans l'extrudeuse à l'extrémité de sortie de l'extrudeuse et le temps de séjour pour la cuisson de la pâte à l'extrémité de sortie de l'extrudeuse est de 0,2 minute à 4 minutes.